# EUROPEAN PATENT APPLICATION

(11) **EP 3 627 842 A1**
(43) Date of publication of application: **25.03.2020**
(21) Application number: 19198697.5
(22) Date of filing: 20.09.2019
(51) Int. Cl.: H04N 21/482, H04N 21/81

(54) **SYSTEMS AND METHODS FOR GENERATING INDIVIDUALIZED PLAYLISTS**

(30) Priority: 21.09.2018 US 201816138604
(71) Applicant: FuboTV Inc., New York, NY 10019 (US)
(72) Inventor: CHOI, Sung Ho, New York, NY New York 10019 (US); SYMBORSKI, Thomas, New York, NY New York 10019 (US); TRETIN, Matthew, New York, NY New York 10019 (US)
(74) Representative: Iqbal, Md Mash-Hud

(57) **Abstract**

The disclosed technology relates to generating individualized playlists. Content from a video source is received and a plurality of queue points are associated with the content. A request for the content is received from a client device. Data associated with a user of the client device is received and a determination is made regarding the content rights associated with the client device. An individualized playlist for the content is generated based on a first set of queue points, the data associated with the user, and the content rights.

## Description

### TECHNICAL FIELD

This present disclosure relates generally to systems and methods for generating individualized playlists, and more particularly to generating an individualized playlist for displaying curated and aggregated content.

### BACKGROUND

Conventional content delivery networks, such as network and public broadcast television stations, provide a mixture of local and national content that is typically curated based on viewer location. For example, subscribers in different geographic locations may receive similar national news broadcasts, but different local news and sports coverage. Conventional broadcast networks may also typically deliver content according to a schedule, without offering the ability for subscribers to retrieve or revisit content that has previously broadcast. It would be desirable to present to subscribers individualized and curated content that may include previously broadcasted content, as well as live video.

### SUMMARY

One aspect of the present disclosure relates to a method for generating an individualized playlist. The method may include receiving content from a video source. The method also includes associating a plurality of queue points with the content. The method includes receiving a request for content from a client device, receiving data associated with a user of the client device, and determining content rights associated with the client device. The content rights may be determined using blackout data associated with the content. The method further includes generating an individualized playlist based on a first set of queue points, the data associated with the user, and the content rights.

Another aspect of the present disclosure relates to a non-transient computer-readable storage medium having instructions embodied thereon, the instructions being executable by one or more processors to perform a method for generating an individualized playlist. The method may include receiving content from a video source. The method also includes associating a plurality of queue points with the content. The method includes receiving a request for content from a client device, receiving data associated with a user of the client device, and determining content rights associated with the client device. The content rights may be determined using blackout data associated with the content. The method further includes generating an individualized playlist based on a first set of queue points, the data associated with the user, and the content rights.

Yet another aspect of the present disclosure relates to a system configured for generating an individualized playlist. The system may include one or more hardware processors configured by machine-readable instructions. The processor(s) may be configured to receive content from a video source and associate a plurality of queue points with the content. The processor(s) may be configured to receive a request for content from a client device and receive data associated with a user of the client device. The processor(s) may be further configured to determine content rights associated with the client device, the content rights determined using blackout data associated with the content. The processor(s) may be further configured to generate an individualized playlist based on a first set of queue points, the data associated with the user, and the content rights.

### BRIEF DESCRIPTION OF THE DRAWINGS

The embodiments herein may be better understood by referring to the following description in conjunction with the accompanying drawings in which like reference numerals indicate identical or functionally similar elements. Understanding that these drawings depict only exemplary embodiments of the disclosure and are not therefore to be considered to be limiting of its scope, the principles herein are described and explained with additional specificity and detail through the use of the accompanying drawings in which:
FIG. 1 is a conceptual block diagram illustrating an example system for generating an individualized playlist, in accordance with various aspects of the subject technology.
FIG. 2 depicts a sequence diagram showing the communications between client devices, token generator, playlist service, content rights engine, and content event engine, in accordance with various aspects of the subject technology.
FIG. 3 depicts an example method for generating an individualized playlist, in accordance with various aspects of the subject technology.
FIG. 4 illustrates an example of a system configured for providing adaptive video encoding, in accordance with some aspects.

### DETAILED DESCRIPTION

The detailed description set forth below is intended as a description of various configurations of embodiments and is not intended to represent the only configurations in which the subject matter of this disclosure can be practiced. The appended drawings are incorporated herein and constitute a part of the detailed description. The detailed description includes specific details for the purpose of providing a more thorough understanding of the subject matter of this disclosure. However, it will be clear and apparent that the subject matter of this disclosure is not limited to the specific details set forth herein and may be practiced without these details. In some instances, structures and components are shown in block diagram form in order to avoid obscuring the concepts of the subject matter of this disclosure.

Various aspects of the disclosure are discussed in detail below. While specific implementations are discussed, it should be understood that this is done for illustration purposes only. A person skilled in the relevant art will recognize that other components and configurations may be used without parting from the spirit and scope of the disclosure.

Conventional content delivery networks provide a mixture of local and national content that is typically delivered to a user based on the user's location. For example, subscribers in different geographic locations may receive similar national news broadcasts, but different local news and sports coverage, all controlled by local hardware and switching facilities. Conventional broadcast networks may also typically deliver content according to a schedule, without offering the ability for subscribers to retrieve or revisit content that has previously broadcast, that may be of interest to an individual user or viewer. For example, a user who may be interested in a particular sports team may have to either watch the live broadcast of a game or rely on game recaps or highlights subsequently broadcast. Accordingly, there is a need for certain embodiments of a playlist generator for generating individualized playlists that are created based on data associated with a particular user, content restrictions associated with a particular client device, and event data associated with content that reflects notable events, such as, a score in a game, a development in a show that causes activity in social media, and/or a newsworthy story, etc.

The disclosed technology addresses the foregoing limitations of conventional content delivery and broadcast systems by providing subscribers individualized and curated content that may include previously broadcasted content, as well as live video. Broadcast content can be time-indexed using queue points that identify segments of the content. The indexed content may then be stored for later retrieval. Content playlists can then be generated using a series of queue points that identify segments of the content. By generating playlists that include a series of queue points or pointers, various segments of content can be referenced, at scale, while avoiding the need for significant memory overhead. Playlist generation may be performed based on user preference information which may, for example, include data or signals used to infer user preferences with respect to content consumption. By way of non-limiting example, user preference information may include content history data, user demographic data, and/or user purchasing data.

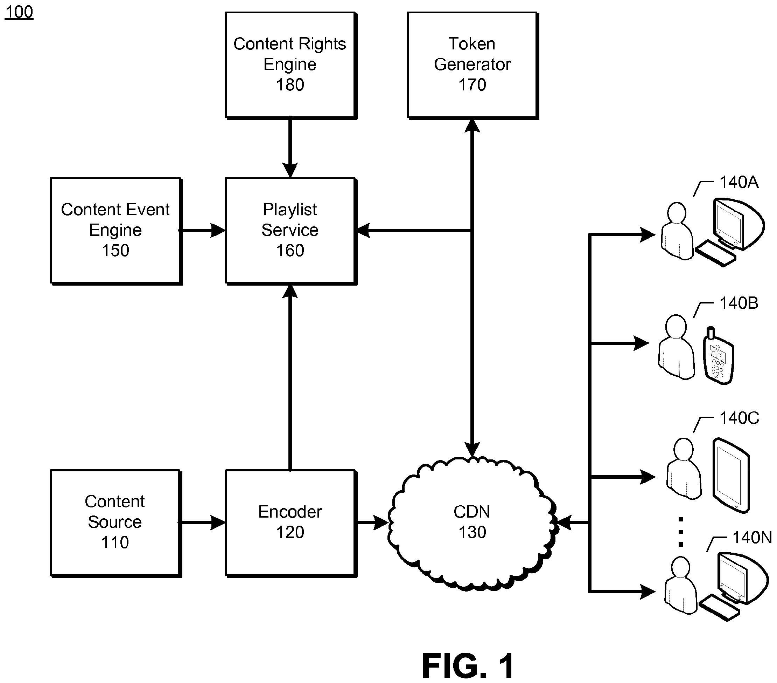

As discussed in further detail below, playlist generation may also be informed by time parameters, such as a playlist length determined by explicitly provided user input, or inferred from user preference information. For example, a user may indicate a preference for a playlist including a mix of his/her favorite content that does not exceed a specified time duration (e.g., 20 minutes). Alternatively, playlist durations may be inferred from user preference information, such as a user's watch history, previous playlists generated by a user, and/or information known about the user's schedule, etc. By way of example, if a user typically spends 45 minutes watching curated playlist content every Wednesday afternoon, any automatically generated playlists may be configured so as to not exceed 45 minutes in total runtime duration. Additional aspects regarding playlist generation are discussed with respect to FIGs. 1-4, below.

FIG. 1 illustrates a conceptual block diagram illustrating an example system 100 for generating an individualized playlist, in accordance with various aspects of the subject technology. Various aspects are discussed with respect to a general wide area network for illustrative purposes, however, these aspects and others may be applied to other types of networks. For example, a network environment may be implemented by any type of network and may include, for example, any one or more of an enterprise private network (EPN), cellular network, a satellite network, a personal area network (PAN), a local area network (LAN), a broadband network (BBN), or a network of public and/or private networks, such as the Internet, or the like. The system 100 may be implemented using any number of communications links associated with one or more service providers, including one or more wired communication links, one or more wireless communication links, or any combination thereof. Additionally, the system 100 can be configured to support the transmission of data formatted using any number of protocols.

The system 100 includes a content source 110, an encoder 120, a content distribution network 130, one or more client devices 140A-N, a content event engine 150, a playlist service 160, a token generator 170 and a content rights engine 180. In one aspect, the system 100 may include additional components, fewer components, or alternative components, such as additional encoders, different networks for different clients, and/or additional third-party servers. The system 100 may include additional components, such as routers or firewalls. The system 100 may be implemented as a single machine or distributed across a number of machines in a network, and may comprise one or more servers.

The system 100 includes one or more clients 140A-N. The clients 140A-N may include machines (*e.g*., servers, personal computers, laptops), virtual machines, containers, mobile devices (*e*.*g*., tablets or smart phones), or smart devices (*e*.*g*., set top boxes, smart appliances, smart televisions, internet-of-things devices). The clients 140AN may utilize software applications, browsers, or computer programs that are running on a device such as a desktop computer, laptop computer, tablet computer, server computer, smartphone, or any other apparatus on which an application (*e.g*., client application) is running that at some point in time, involves a client requesting content and/or receiving streaming video provided by the system 100. In one aspect, the clients 140A-N may operate pursuant to the port control protocol (PCP) to control how data (*e.g*., packets) are handled to provide for the data flow of content and streaming video to the clients 140AN. Other protocols for provisioning data flow to the clients 140A-N may also be used.

The devices (*e.g*., encoder 120, client devices 140A-N, content event engine 150, playlist service 160, token generator 170 and content rights engine 180) may be connected over links through ports. Any number of ports and links may be used. The ports and links may use the same or different media for communications. Wireless, microwave, wired, Ethernet, digital subscriber lines (DSL), telephone lines, T1 lines, T3 lines, satellite, fiber optics, cable and/or other links may be used.

According to the subject technology disclosed herein, a remote content source 110 or provider and may provide a compressed video signal representing live video to one or more encoders 120. The content provided by the content source 110 may be transmitted or broadcasted by a data link, such as for example, a satellite, a terrestrial fiber cable, and/or an antenna. The compressed video signal received by the one or more encoders 120 may, for example, be compressed using a video encoder that may be a device or program that compresses data to enable faster transmission. The video encoder may compress the data into one or more video compression standards, such as H.265 and H.264 per one or more coding standards, such as MPEG-H, MPEG-4, and MPEG-2. The compressed video signal may contain video data representing programming and advertisements (*e.g*., content). The compressed video signal, may further include markers that delimit the advertisements to enable replacement or insertion of a particular advertisement within the programming (*e.g*., local advertisement insertion opportunity), scheduling information, and/or data representing one or more characteristics of the content associated with the programming. In one aspect, the markers, scheduling information, and/or content characteristics, may comply with certain standards, such as the SCTE-35 standard.

The compressed video signal may be processed to extract data, such as metadata representing the markers, scheduling, content characteristics, and/or the SCTE-35 information. In one aspect, the metadata extracted from the compressed video signal may be provided to the playlist service 160 for generation of an individualized playlist, as discussed further below.

In some aspects, the encoder 120 may be configured to receive the compressed video signal and output encoded video data (*e*.*g*., video stream encoded in various resolutions and bitrates) to the content distribution network 130. The encoded video data output by the encoder 120 may comprise encoded segments of content associated with a video stream, provided in several versions - where each version provides the content at a different resolution and bitrate (*e.g*., profiles). In one aspect, the encoder 120 may be configured to decode, encode, and/or transcode the compressed video stream using one or more video compression standards, such as H.265 and H.264 per one or more coding standards, such as MPEG-H, MPEG-4, and MPEG-2.

For example, for a compressed video stream comprising a video stream of content provided at a video resolution of 1080p (1920x1080), a bitrate of about 50 Mbps, and compressed using the MPEG-2 standard, the encoder 120 may be configured to transcode or convert the compressed video stream into encoded video data (*e*.*g*., video stream encoded in various resolutions and bitrates). The encoded video data may comprise a plurality of profiles that include a first profile having a resolution of 1080p (1920x1080) and bitrate of about 2-6 Mbps, a second profile having a resolution of 720p (1280x720) and bitrate of about 0.9-3 Mbps, a third profile having a resolution of 576p (1024x576) and bitrate of about 0.6-2 Mbps, a fourth profile having a resolution of 480p (848x480) and bitrate of about 0.4-1.5 Mbps, a fifth profile having a resolution of 432p (768x432) and bitrate of about 0.3-1.3 Mbps, a sixth profile having a resolution of 360p (640x360) and bitrate of about 0.2-1 Mbps, and/or a seventh profile having a resolution of 240p (424x240) and bitrate of about 0.1-0.7 Mbps, using the H.264 standard.

The encoder 120 may also be configured to fragment, segment, or divide each respective profile into individual files (*e.g*., segments). Each segment may be configured to be individually decodable without requiring data from a previous or subsequent segment to start decoding a particular segment. For example, for encoded video data comprising an H.264 video stream generated by the encoder 120, the segments for each profile of the plurality of profiles *(e.g.,* first, second, third, fourth, fifth, sixth, and seventh profiles) may comprise a few seconds of the content. In this example, such segments may each have a duration of about 2-30 seconds, and may typically have a duration of about 4-10 seconds. In other aspects, fragmentation, segmentation, and/or division of each respective profile into individual files (e.g., segments) may be performed by a packager that is configured to receive encoded video data from the encoder 120 and output the segments. In one aspect, the segments may be provided to the content distribution network ("CDN") 130 for storage, caching and/or serving to client devices 140A-N.

The encoder 120 may also be configured to generate a manifest that associates a plurality of queue points to the individual segments of the content. The queue points may be organized or listed in a particular order or sequence, to ensure proper playback or reading of the segmented and encoded video segments by the client device 140A-N. The encoder 120 may further be configured to generate a high-level or master manifest that identifies the profiles and their characteristics (*e.g*., resolution, bitrate) for the content. The manifests may comprise text files that are provided to the playlist service 160 for use in generating individualized playlists, as discussed further below. In other aspects, generation of the manifest may be performed by the packager discussed above.

The CDN 130 may comprise a geographically distributed network of servers and/or data centers. CDN 130 distributes service spatially relative to the client devices 140A-N to provide high availability and high performance. The CDN 130 may store the video segments provided by the encoder 120 or packager and serve the video segments to the client devices 140A-N. CDN 130 may include various physical network devices (e.g., servers, routers, or switches, etc.) or virtual network devices (e.g., that are instantiated as containers or virtual machines) for serving the video segments to the client devices 140A-N. The CDN 130 may be configured to receive requests for content from client devices 140A-N, serve video segments associated with an individualized playlist generated by the playlist service 160, and validate tokens for video segments associated with the individualized playlist generated by the playlist service 160.

The playlist service 160 may include electronic storage, one or more processors, and/or other components. The playlist service 160 may include communication lines, or ports to enable the exchange of information with a network and/or other computing platforms. Illustration of the playlist service 160 in FIG. 1 is not intended to be limiting. The playlist service 160 may include various hardware, software, and/or firmware components operating together to provide the functionality attributed herein to the playlist service 160. For example, playlist service 160 may be implemented by a cloud of computing platforms operating together as the playlist service 160. The playlist service 160 can include various physical network devices (e.g., servers, routers, or switches, etc.) or virtual network devices for generating an individualized playlist for displaying curated and aggregated content.

The playlist service 160 may be configured to generate a playlist for individual client devices 140A-N in response to receiving a request for content from a client device 140A-N. The playlist may comprise a set of queue points or reference a set of queue points, that point to video segments stored at the CDN 130. In some aspects, the playlist service 160 identifies, arranges, and compiles a set of queue points derived from manifests to generate a playlist of video segments to facilitate playback or display of the content at respective client devices 140A-N. The playlist generated by the playlist service 160 is configured to reference video segments stored at the CDN 130, that when played or displayed according to the playlist, enables playback of the video segments served by the CDN 130 by a particular client device 140A-N at the appropriate resolution for a particular client device 140A-N, to thereby present curated content to the respective user of the client device 140A-N. In some aspects, the playlist generated by the playlist service 160 facilitates playback of the video segments referenced in the playlist at different bitrates and/or resolutions.

Prior to requesting content, the client device 140A-N is authenticated by an authentication system to ensure that requests transmitted by the client device 140A-N are generated by a trusted source and not from a spoofed or impersonated client device. Once authenticated, a token may be generated by the token generator 170 in response to receiving a request from the client device 140A-N. The token may be generated based on a current location of the client device 140A-N, a billing location of the client device 140A-N, and/or a channel of the content requested from the client device 140A-N. The token may include a start time, stop time, offset time (e.g., 5 minutes from live video stream), and may be configured to allow access to video segments stored at the CDN 130. Once issued to a particular client device 140A-N, the token may be used by the client device 140A-N to request video segments from the CDN 130 whose queue points are referenced or otherwise identified in an individualized playlist generated by the playlist service 160. The token provided by the token generator 170 may be validated by the CDN 130 at time of serving of requested video segments.

In some aspects, the playlist service 160 is configured to enforce blackout rules or geographical limitations (e.g., blackout data) imposed by the remote content source 110 or content provider by generating an individualized playlist for a particular client device 140A-N that includes queue points to segments of content that the particular client device 140A-N has access to view or play. The blackout data associated with the content may be provided to the playlist service 160 by the content rights engine 180. The blackout data may include content viewing restrictions based on at least one of a current location of the client device 140A-N, a billing location of the client device 140A-N, and/or a characteristic of the client device 140A-N (e.g., client type, operating system, network connection, available bandwidth, network protocol, screen size, device type, display capabilities, and/or codec capabilities). For example, the blackout data may identify specific content that may be restricted to viewers based on zip code, city, market or state, may include a schedule for a blackout, and/or may identify alternate content to display in lieu of the restricted content. Using the blackout data, the playlist service 160 may determine the content rights applicable to content requested by a particular client device 140A-N and based on the determined content rights, generate an individualized playlist that references queue points for allowed content.

In some implementations, upon receiving a request for content from a client device 140A-N, the playlist service 160 identifies a current location and/or billing location of the client device, as well as a channel for the requested content. The playlist service 160 communicates with the content rights engine 180 to query whether blackout rules or geographical limitations apply for the requested content based on the current location and/or billing location of the client device. If no blackout rules or geographical limitations apply, the playlist service 160 generates an individualized playlist for the requested content. If blackout rules or geographical limitations apply, the playlist service 160 generates an individualized playlist for alternate content identified for a particular zip code, city, market or state applicable to a client device 140A-N (e.g., current location and/or billing location of the client device).

In some aspects, by generating an individualized playlist on-demand for requested content based on a current location and/or billing location of a client device 140A-N, streaming video feeds for every possible scenario or permutation contemplated by applicable blackout rules or geographical limitations is not necessary. For example, should a separate mobile and desktop version of a video feed be required, in conventional systems both video feeds would be streamed regardless of whether there are any mobile devices or desktops requesting the video feeds. In contrast, the playlist service 160 of the subject technology may generate an individualized playlist for a client device 140A-N in response to a request for the video feed, and is further configured to account for blackout rules or geographical limitations by including queue points in the playlist that point to alternate content when necessary. In other words, rather than streaming unnecessary video feeds, the subject technology enables creation of individualized playlists on demand, and applies blackout rules or geographical limitations by utilizing queue points to point to video segments for alternate content when required by the blackout data. Requests for content from client devices 140A-N are received by the playlist service 160, which in turn generates an individualized playlist for a particular client device 140A-N that provides the appropriate content in response to the request, thereby dynamically mapping the request to the appropriate content for each user and/or client device 140A-N.

The playlist generated by the playlist service 160 may provide a set of queue points to video segments to facilitate playback of content for a time-limited duration. For example, the content played in response to a particular playlist may have a duration of about 5 second, 10 seconds, 15 second, 20 seconds, 25 seconds, 30 seconds, 35 seconds, 40 seconds, 45 seconds, 50 seconds, 55 seconds, 60 seconds, or may be shorter or longer than the aforementioned ranges. For example, the playlist service 160 may be configured to generate a unique playlist every 4 seconds for each client device 140A-N. In one aspect, by generating playlists that provide a time-limited duration of content, time-based blackout rules or geographical limitations may be imposed at or near real-time. For example, for a first client device 140A with a billing and current location in New York, the client device 140A may have access to a regional sports and news content. If the client device 140A logs into the system 100 from Los Angeles, then depending on applicable blackout rules or geographical limitations, the client device 140A may no longer have access to New York regional news content and instead, will have access to Los Angeles regional news content. In addition, depending on the blackout data for certain content, such as sports content, the client device 140A with a current location of Los Angeles and a billing location of New York may retain access to New York regional sports content when in Los Angeles or may lose access to New York regional sports content when in Los Angeles. In one aspect, content rights may be based on content, channel, and/or network.

In another example, a client device 140B with a billing and current location of Los Angeles, may have access to content from a particular channel or network until such time that a blackout rule or geographical limitation applies. In this example, the client device 140B may be viewing content provided on a sports channel. The sports channel has a blackout restriction that goes into effect at 7 PM, with the broadcast of a local sports game. As 7 PM approaches, the client device 140B receives content broadcast on the sports channel via the individualized playlist generated by the playlist service 160. An individualized playlist is generated every 4 seconds by the playlist service 160 for the client device 140 identifying different sets of queue points for video segments of the content broadcast on the sports channel. Blackout data is communicated to the playlist service 160 informing the playlist service 160 of the restriction to content requested by the client device 140B on the sports channel (e.g., certain client devices in Los Angeles are not allowed access to the sports game on the sports channel commencing at 7PM and terminating at 10PM). At or near the time of blackout, the playlist service 160 generates an individualized playlist providing a set of queue points for alternate content, thereby preventing access to the local sports game on the sports channel. The blackout rule is thus implemented as the playlist service 160 generates the individualized playlist for the client device 140B at or near real time.

In yet another example, a user with an account for access to the system 100 may have a first client device 140A comprising a personal computer and a second client device 140B comprising a mobile device. The client device 140A may request access to content broadcast on a sports network. The sports network, however, may restrict access to the content from client devices comprising mobile devices. As such, if the user attempts to access the content on the sports network from client device 140B, the playlist service 160 will generate a playlist that provides alternate content per the blackout rules, and prevent access to the content broadcast on the sports network.

The content event engine 150 may include a plurality of hardware, software, and/or firmware components operating together to provide the functionality attributed herein to the content event engine 150 and may utilize data received from various and different sources or services. The content event engine 150 may be configured to provide time-related data regarding notable events (e.g., event data) in content provided by the content source 110 to the playlist service 160. The time-related event data may comprise a start time, a duration, and/or an end time associated with notable events (e.g., sports highlight, newsworthy development, show highlight, notable moment in a show, etc.). For example, the time-related event data may be generated using content schedule information, data specific to particular sports (e.g., time of pitch throws for baseball, score changes, etc.), and social media activity relating to content. Event data may be utilized by the playlist service 160 to generate an individualized playlist of notable events that may be of interest to a particular user of a client device 140A-N.

For example, the playlist service 160 may use the event data to generate an individualized playlist for a particular user that reflects sports highlights that may have occurred in the past week for a sports team that is of interest to the user. The system 100 may be configured to track which sport games the user or client devices 140A-N associated with the user, have been displayed or played. Any sport games that were not displayed to the user via the client devices 140A-N, may be identified for inclusion in an individualized playlist that provides the user with an opportunity to view relevant highlights for a particular sports team that may be of interest to the user, and that the user may have missed when the content (e.g., sports game) was originally broadcast. The playlist service 160 may thus, be configured to generate individualized playlist for particular users to provide an opportunity to each user to view curated content that may have been missed over a certain period (e.g., games missed last week, best of moments in a show that is frequently viewed by the user, local news that may be deemed relevant to a particular user based on location and prior news consumption activity). The system 100, may therefore provide not just general content recommendations (e.g., a particular show or program to consume) for a particular user, but may further provide recommended segments of content (e.g., individual highlights of a sport game, specific news story from a newscast, notable development in a specific program or show that is of interest to a user) for viewing and consumption by the particular user.

In some aspects, machine learning techniques may be utilized to generate the time-related event data. For example, the system 100 may be configured to process closed captioning data and/or the content itself to perform face recognition (e.g., identify particular newscaster or reporters) or text recognition (e.g., graphics present in the content such as scores from a sports game, graphics present in a newscast, etc.) to generate the time-related event data. If processing of the content reveals a score change, for example, the system 100 (e.g., content event engine 150) may be configured to record the event and denote a time range for the event for use by the playlist service 160 in generating an individualized playlist, as described above.

In one aspect, the playlist service 160 may be further configured to associate one or more audio tracks with video segments. For example, the playlist service 160 may be configured to provide a set of audio queue points that may be associated to particular video segments of content. The playlist service 160 may swap a first audio track for a second audio track where appropriate. For example, a user of the system 100 may identify Spanish as their preferred language for consuming content. In response, the playlist service 160 may identify a Spanish audio track for content requested by a client device 140A-N associated with the Spanish speaking user and swap an English audio track, for the Spanish audio track. In another example, a client device 140A-N may request to listen to a commentary associated with a particular segment of content. In response, the playlist service 160 may identify and include a set of audio queue points for the audio track associated with the commentary in response to the request from the client device 140A-N.

As described above, a client device 140A-N requesting content may provide to the playlist service information about the client device, such as a current location of the client device 140A-N, a billing location of the client device 140A-N, and/or a characteristic of the client device 140A-N (e.g., client type, operating system, network connection, available bandwidth, network protocol, screen size, device type, display capabilities, and/or codec capabilities). In addition, information or data associated with a user of the client device 140A-N may be accessed, received, and/or utilized by the playlist service 160 to generate an individualized playlist. The data associated with the user may comprise, for example, content consumption history data (e.g., viewing history), content recording history, user demographic data (e.g., age, gender, income, ethnicity, education, etc.), user purchasing data (e.g., video on demand purchasing, content subscription, credit card transactions, etc.), user social media activity (e.g., postings relating to entertainment, interest in hobbies or particular brands or products, etc.), and/or user preferences (e.g., language, shows or programs of interest, sports team of interest, etc.). The playlist service 160 may be configured to identify content that may be most relevant to a particular user based on the data associated with the user. For example, if a user is a soccer fan based on content consumption history data or social media postings relating to a particular team or sport, the playlist service 160 may identify content relating to soccer and generate an individualized playlist of soccer highlights that may have occurred in a recent unwatched game.

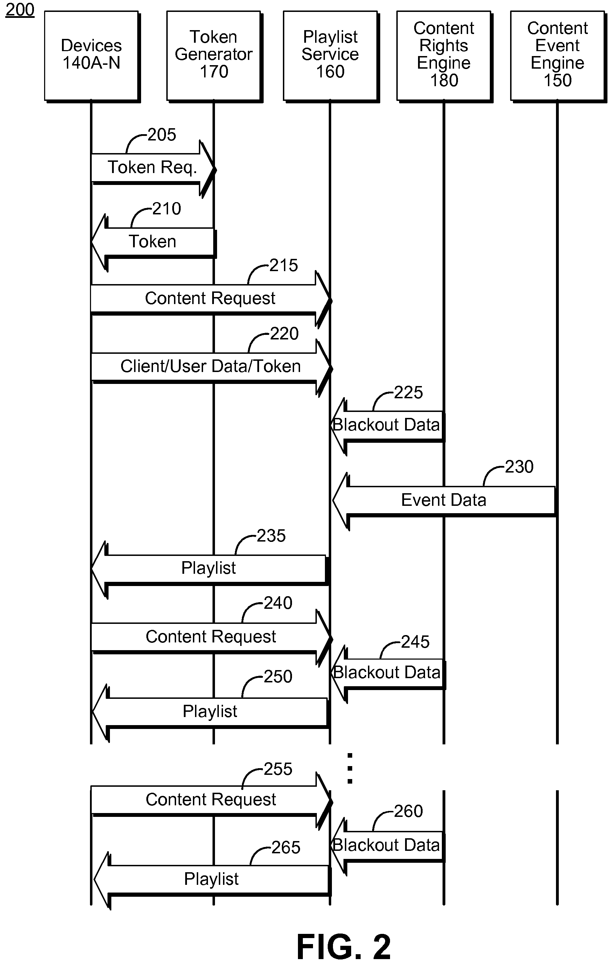

FIG. 2 depicts a sequence diagram 200 relating to generation of an individualized playlist and shows communications between client devices 140A-N, token generator 170, playlist service 160, content rights engine 180, and content event engine 150, in accordance with various aspects of the subject technology. Additional, different, or fewer acts may be provided. For example, acts for any one of the devices (e.g., client devices 140A-N, playlist service 160, token generator 170, content rights engine 180, and content event engine 150) are performed with or without the other devices performing acts. In yet another example, processing, routing, or other networking acts are performed in addition to the acts shown in FIG. 2. The acts may be performed in the order shown. The order is listed in numerical sequence and/or from top to bottom in FIG. 2. In alternative aspects, the acts may be performed in other orders.

Referring to FIG. 2, a sequence diagram 200 is illustrated showing that the client devices 140A-N perform acts 205, 215, 220, 240, and 255. The token generator 170 performs act 210. The playlist service 160 performs acts 235, 250, and 265. The content rights engine 180 performs acts 225, 245, and 260. The content event engine 150 performs act 230. Other devices may perform any one or more of the acts, such as a different server or module. Any of the acts may involve operations by more than one component.

In act 205, after a client device 140A-N is authenticated, the client device 140AN requests a token from a token generator 170. In act 210, in response to the request for a token from the client device 140A-N, the token generator 170 generates and provides a token to the client device 140A-N. The token is generated based on the type of client device 140A-N, current location or zip code of the client device 140A-N, and/or the billing location or zip code of the client device 140A-N. A token may be generated once, at the time the client device 140A-N first initiates a request for access to content. Thereafter, subsequent requests for content from the same client device 140A-N during the active session may not require generation of new tokens. The token allows access to the video segments referenced in a particular playlist. In one aspect, the token may be configured to expire after a certain time has lapsed.

In act 215, a request for content is made by the client device 140A-N and received by the playlist service 160. In act 220, the client device 140A-N may provide the token, client data, and/or user data to the playlist service 160. The playlist service 160 may thus receive the token from the client device 140A-N. The client data may be used by the playlist service 160 to determine the device type of the client device 140A-N, current location of the client device 140A-N, and billing location of the client device 140A-N. The user data may be used by the playlist service 160 to determine consumption history data, content recording history data, user demographic data, user purchasing data, user social media activity, and/or user preferences.

The playlist service 160 may provide the token, client data, and/or user data to the content rights engine 180 for identification of applicable blackout rules and determination of content rights associated with the requesting client device 140A-N. In act 225, the content rights engine 180 identifies any applicable blackout rules or geographical restrictions associated with the content and the client device 140A-N, and provides the blackout rules or geographical restrictions (e.g., blackout data) to the playlist service 160 for use in generating the playlist. In one aspect, the blackout data may comprise content viewing restrictions based on a device type of the client device 140A-N, a current location of the client device 140A-N, and/or a billing location of the client device 140A-N.

In act 230, the content event engine 150 provides event data relating to notable events occurring in the content to the playlist service 160 for use in generating the playlist. The event data may include a plurality of start times for one or more events associated with the content, where each event comprises a highlight associated with the content. In one aspect, the playlist service 160 may generate an individualized playlist for a particular client device 140A-N based on the token, client data, user data, blackout data, and/or event data. For example, based on a current location of the client device 140A-N and consumption history data of a user associated with the client device A-N, the playlist service 160 may generate an individualized playlist that includes a set of queue points to a regional sports game having no blackout restrictions, followed by highlights showing notable plays for a favorite sports team that occurred in a previously unwatched sports game. In another example, the playlist service 160 may generate an individualized playlist that restricts access to a particular sports game per a blackout rule, and instead includes a set of queue points to alternative content that may be of interest to the user of the client device 140A-N based on user preference data.

In act 235, the playlist service 160 provides the individualized playlist to the client device 140A-N. The playlist generated by the playlist service 160 includes references to a first set of queue points to facilitate playback of the content for a time-limited duration (e.g., 4 seconds). The playlist may comprise a text file that includes references or pointers (e.g., queue points) to video segments stored at a content distribution network. When received by the client device 140A-N, the client device requests the appropriate video segment of the requested content identified in the playlist from a content distribution network. Once the video segment(s) is received, the client device 140A-N plays or reads the video segments to thereby present or display the content to a respective user.

In one aspect, the client device 140A-N may request the video segments identified in the playlist from the content distribution network using the token provided by the token generator 170. The content distribution network may then validate the token and if authorized, provides the requested video segments to the client device 140A-N. Once validated, the content distribution network may serve or route the video segments to the client device 140A-N.

In act 240, a new request for content is received from the client device 140A-N. The request for the content is received at the playlist service 160. In response, the playlist service 160 queries the content rights engine 180 for any applicable blackout rules. In act 245, the content rights engine 180 provides blackout data to the playlist service 160. In act 250, the playlist service 160 generates a second playlist based on a second set of queue points to facilitate playback of a different portion of the content for a time-limited duration (e.g., 4 seconds). The second set of queue points do not include any queue points from the first set of queue points. When received by the client device 140A-N, the client device requests the appropriate video segment of the requested content identified in the second playlist from the content distribution network. Once the video segment(s) is received, the client device 140A-N plays or reads the video segments to thereby present or display the different portion of the content to the respective user.

In one aspect, generation and transmission of playlists (e.g., acts 235, 250), is performed each time a request for content (e.g., acts 215, 240) is received by the playlist service 160. As such, the playlist service 160 dynamically generates a playlist in response to a request from a client device 140A-N. In other aspects, no new token is required for subsequent content requests so long as a session between the client device 140A-N and the system 100 remains active. In such an implementation, it is the underlying video segments identified in each playlist that changes with each new playlist. In other aspects, processing of the geo-location information for a particular client device 140A-N is processed at the initial request for content.

In act 255, a new request for content is received from the client device 140A-N. The request for the content is received at the playlist service 160. In response, the playlist service 160 queries the content rights engine 180 for any applicable blackout rules. In act 260, the content rights engine 180 provides blackout data to the playlist service 160, which in this example, may inform the playlist service 160 that a blackout restriction now applies. In act 265, the playlist service 160 generates a third playlist based on a third set of queue points to facilitate playback of alternate content for a time-limited duration (e.g., 4 seconds), thereby honoring the blackout rules. The third set of queue points do not include any queue points from the first set or second of queue points. When received by the client device 140A-N, the client device requests the appropriate video segment of the alternate content identified in the third playlist from the content distribution network. Once the video segment(s) is received, the client device 140A-N plays or reads the video segments to thereby present or display the alternate content to the respective user.

The various components of the system are configured by hardware and/or software to receive a request for content, identify applicable blackout rules, determine content rights, identify notable events in content, and generate playlists that identify video segments that when played by a client device results in individualized and curated content being displayed to a user, and/or combinations thereof. Logic is encoded in one or more non-transitory computer-readable media for operating the clients 140A-N, the components of the playlist service 160, token generator 170, content rights engine 180 and content event engine 150. The logic includes code for execution by a processor or processors. When executed by a processor, the code is used to perform operations for receiving a request for content, identifying applicable blackout rules, determining content rights, identifying notable events in content, and generating playlists that identify video segments that when played by a client device results in individualized and curated content being displayed to a user.

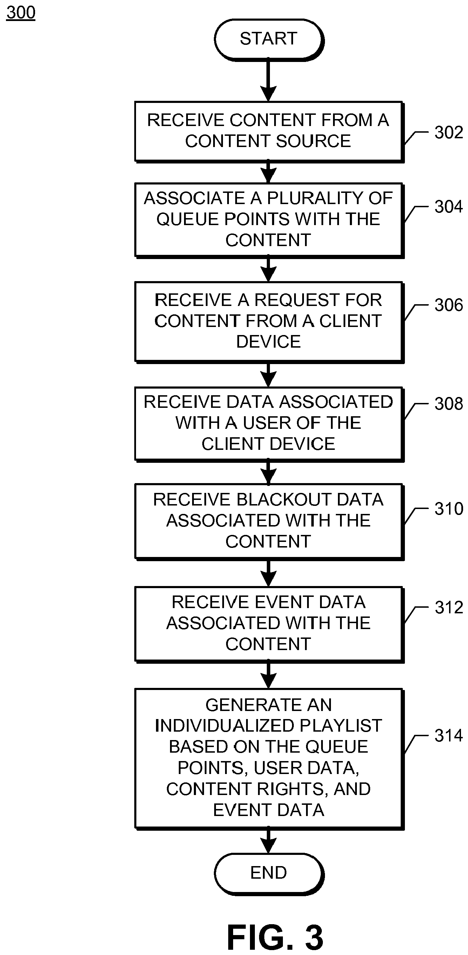

FIG. 3 depicts an example method 300 for generating an individualized playlist, in accordance with various aspects of the subject technology. It should be understood that, for any process discussed herein, there can be additional, fewer, or alternative steps performed in similar or alternative orders, or in parallel, within the scope of the various aspects unless otherwise stated. The method 300 can be performed by a network, and particularly, a system for generating individualized playlists (e.g., the system 100 of FIG. 1) or similar system.

In some implementations, method 300 may be implemented in one or more processing devices *(e.g.,* a digital processor, an analog processor, a digital circuit designed to process information, an analog circuit designed to process information, a state machine, and/or other mechanisms for electronically processing information). The one or more processing devices may include one or more devices executing some or all of the operations of method 300 in response to instructions stored electronically on an electronic storage medium. The one or more processing devices may include one or more devices configured through hardware, firmware, and/or software to be specifically designed for execution of one or more of the operations of method 300.

An operation 302 may include receiving content from a video or content source (e.g., content source 110 of FIG. 1). An operation 304 may include associating a plurality of queue points with the content (e.g., encoder 120 of FIG. 1). An operation 306 may include receiving a request for content from a client device (e.g., client device 140AN of FIG. 1). An operation 308 may include receiving data associated with a user of the client device. In one aspect, the data associated with the user may include content consumption history data, user demographic data, and user purchasing data. An operation 310 may include receiving blackout data associated with the content, the blackout data including content viewing restrictions based on a client device type, a current location of the client device, and/or a billing location of the client device. Content rights associated with the client device may be determined based on the blackout data applicable to the content. An operation 312 may include receiving event data associated with the content, the event data including a plurality of start times for a plurality of events associated with the content where each event comprises a highlight associated with the content (e.g., a score change associated with a sporting event).

An operation 314 may include generating an individualized playlist based on a first set of queue points, the data associated with the user, the content rights, and/or the event data. The playlist may include references to the first set of queue points to facilitate playback of the content for a time-limited duration, such as a time-limited duration not exceeding 5 seconds. The method 300 may further include receiving a subsequent request for content from the client device; and generating a second playlist based on a second set of queue points, the content rights, and the data associated with the user, and/or the event data. The second playlist may include references to the second set of queue points to facilitate playback of a different portion of the content for a time-limited duration, such as a time-limited duration not exceeding 5 seconds. In one aspect, the second set of queue points may not include any queue points from the first set of queue points. The method 300 may further include receiving a token from the client device, the token generated based on a current location of the client device and/or a billing location of the client device.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the spirit and scope of the appended claims. For example, it is to be understood that the present technology contemplates that, to the extent possible, one or more features of any implementation can be combined with one or more features of any other implementation.

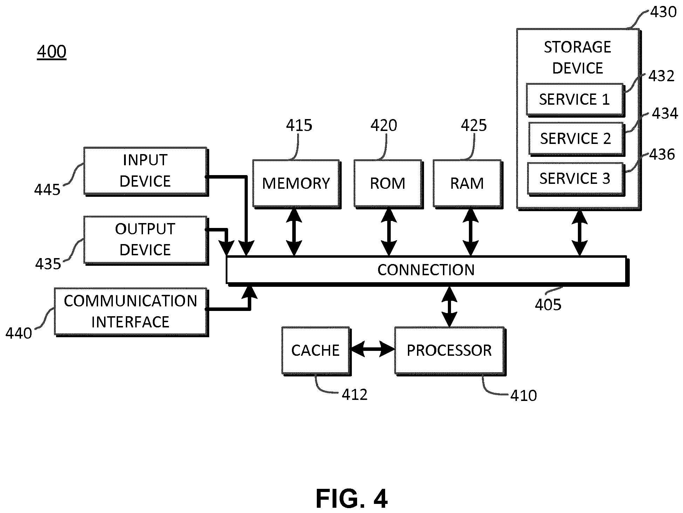

FIG. 4 depicts an example of a computing system 400 in which the components of the system are in communication with each other using connection 405. Connection 405 can be a physical connection via a bus, or a direct connection into processor 410, such as in a chipset architecture. Connection 405 can also be a virtual connection, networked connection, or logical connection.

In some embodiments computing system 400 is a distributed system in which the functions described in this disclosure can be distributed within a datacenter, multiple datacenters, a peer network, etc. In some embodiments, one or more of the described system components represents many such components each performing some or all of the function for which the component is described. In some embodiments, the components can be physical or virtual devices.

System 400 includes at least one processing unit (CPU or processor) 410 and connection 405 that couples various system components including system memory 415, such as read only memory (ROM) 420 and random access memory (RAM) 425 to processor 410. Computing system 400 can include a cache 412 of high-speed memory connected directly with, in close proximity to, or integrated as part of processor 410.

Processor 410 can include any general purpose processor and a hardware service or software service, such as services 432, 434, and 436 stored in storage device 430, configured to control processor 410 as well as a special-purpose processor where software instructions are incorporated into the actual processor design. Processor 410 may essentially be a completely self-contained computing system, containing multiple cores or processors, a bus, memory controller, cache, etc. A multi-core processor may be symmetric or asymmetric.

To enable user interaction, computing system 400 includes an input device 445, which can represent any number of input mechanisms, such as a microphone for speech, a touch-sensitive screen for gesture or graphical input, keyboard, mouse, motion input, speech, etc. Computing system 400 can also include output device 435, which can be one or more of a number of output mechanisms known to those of skill in the art. In some instances, multimodal systems can enable a user to provide multiple types of input/output to communicate with computing system 400. Computing system 400 can include communications interface 440, which can generally govern and manage the user input and system output. There is no restriction on operating on any particular hardware arrangement and therefore the basic features here may easily be substituted for improved hardware or firmware arrangements as they are developed.

Storage device 430 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read only memory (ROM), and/or some combination of these devices.

The storage device 430 can include software services, servers, services, etc., that when the code that defines such software is executed by the processor 410, it causes the system to perform a function. In some embodiments, a hardware service that performs a particular function can include the software component stored in a computer-readable medium in connection with the necessary hardware components, such as processor 410, connection 405, output device 435, etc., to carry out the function.

It will be appreciated that computing system 400 can have more than one processor 410, or be part of a group or cluster of computing devices networked together to provide greater processing capability.

For clarity of explanation, in some instances the various embodiments may be presented as including individual functional blocks including functional blocks comprising devices, device components, steps or routines in a method embodied in software, or combinations of hardware and software.

In some aspects the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

As used herein, the term "module" may refer to any component or set of components that perform the functionality attributed to the module. This may include one or more physical processors during execution of processor readable instructions, the processor readable instructions, circuitry, hardware, storage media, or any other components.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A computer-implemented method for generating an individualized playlist, comprising:
receiving content from a video source;
associating a plurality of queue points with the content;
receiving a request for content from a client device;
receiving data associated with a user of the client device;
determining content rights associated with the client device, the content rights determined using blackout data applicable to the content; and
generating an individualized playlist based on a first set of queue points, the data associated with the user, and the content rights.

2. The computer-implemented method of claim 1, further comprising receiving a token from the client device, optionally wherein the token is generated based on a current location of the client device and a billing location of the client device.

3. The computer-implemented method of claim 1 or 2, further comprising receiving event data, wherein the event data comprises a plurality of start times for a plurality of events associated with the content, wherein each event comprises a highlight associated with the content, optionally further comprising generating the playlist based on the event data.

4. The computer-implemented method of any preceding claim, wherein the data associated with the user comprises at least one of content consumption history data, user demographic data, and user purchasing data.

5. The computer-implemented method of any preceding claim, wherein the blackout data comprises content viewing restrictions based on at least one of a current location of the client device and a billing location of the client device.

6. The computer-implemented method of any preceding claim, wherein the playlist comprises references to the first set of queue points to facilitate playback of the content for a time-limited duration, optionally wherein the time-limited duration does not exceed 5 seconds.

7. The computer-implemented method of claim 6, further comprising:
generating a second playlist based on a second set of queue points, the content rights, and the data associated with the user;
wherein the second set of queue points do not include any queue points from the first set of queue points; and
wherein the second playlist comprises references to the second set of queue points to facilitate playback of a different portion of the content for a time-limited duration.

8. A non-transitory computer-readable medium comprising instructions, the instructions, when executed by a computing system, cause the computing system to:
receive content from a video source;
associate a plurality of queue points with the content;
receive a request for content from a client device;
receive data associated with a user of the client device;
determine content rights associated with the client device, the content rights determined using blackout data applicable to the content; and
generate an individualized playlist based on a first set of queue points, the data associated with the user, and the content rights.

9. The non-transitory computer-readable medium of claim 8, wherein the instructions further cause the computing system to receive a token from the client device, optionally wherein the token is generated based on a current location of the client device and a billing location of the client device.

10. The non-transitory computer-readable medium of claim 8 or 9, wherein the instructions further cause the computing system to receive event data, wherein the event data comprises a plurality of start times for a plurality of events associated with the content, wherein each event comprises a highlight associated with the content, optionally wherein the instructions further cause the computing system to generate the playlist based on the event data.

11. The non-transitory computer-readable medium of any one of claims 8 to 10, wherein the data associated with the user comprises at least one of content consumption history data, user demographic data, and user purchasing data.

12. The non-transitory computer-readable medium of any one of claims 8 to 11, wherein the blackout data comprises content viewing restrictions based on at least one of a current location of the client device and a billing location of the client device.

13. The non-transitory computer-readable medium of any one of claims 8 to 12, wherein the instructions further cause the computing system to generate a second playlist based on a second set of queue points, the content rights, and the data associated with the user; wherein the second set of queue points do not include any queue points from the first set of queue points.

14. A system comprising:
a processor; and
a non-transitory computer-readable medium storing instructions that, when executed by the system, cause the system to:
receive content from a video source;
associate a plurality of queue points with the content;
receive a request for content from a client device;
receive data associated with a user of the client device;
determine content rights associated with the client device, the content rights determined using blackout data applicable to the content; and
generate an individualized playlist based on a first set of queue points, the data associated with the user, and the content rights.

15. The system of claim 14, wherein the instructions further cause the system to generate a second playlist based on a second set of queue points, the content rights, and the data associated with the user; wherein the second set of queue points do not include any queue points from the first set of queue points.
